# EUROPEAN PATENT SPECIFICATION

(11) **EP 4 173 458 B1**
(45) Date of publication and mention of the grant of the patent: **03.07.2024**
(21) Application number: 22201742.8
(22) Date of filing: 14.10.2022
(51) Int. Cl.: A01B 59/06, A01B 71/06, A01B 59/043, B60D 1/62, B62D 49/06

(54) **CONNECTION SYSTEM FOR CONNECTING AN AGRICULTURAL MACHINE OR EQUIPMENT WITH A TRACTOR**
VERBINDUNGSSYSTEM ZUM VERBINDEN EINER LANDWIRTSCHAFTLICHEN MASCHINE ODER EINES GERÄTS MIT EINEM TRAKTOR
SYSTÈME DE LIAISON POUR RELIER UNE MACHINE AGRICOLE OU UN ÉQUIPEMENT AGRICOLE À UN TRACTEUR

(30) Priority: 27.10.2021 IT 202100005111 U
(43) Date of publication of application: 03.05.2023
(73) Proprietor: C.m.u. Soc. Coop. a.r.l, 61033 Fermignano (IT)
(72) Inventor: PIERLEONI, Renzo, 61029 Urbino (IT)
(74) Representative: Biondini, Daniele

(56) References cited:
- EP-A1- 0 676 123
- EP-A2- 2 225 925
- WO-A1-2014/125466
- DE-A1- 4 132 889
- US-A1- 2016 052 563
- US-A1- 2020 267 884

## Description

This invention relates to a connection system for connecting an agricultural equipment or machine to a tractor.

The above-mentioned connection system can be applied to various types of agricultural machines and equipment.

Through the use of the system proposed here it is therefore possible to connect, to any agricultural tractor, equipment and machines intended for different agricultural uses.

In particular, the above-mentioned system has been conceived to allow the connection between the tractor and an equipment or a machine for agricultural use by means of manoeuvres performed from the driving position of the tractor, without the external aid of an operator.

Moreover, this connection system has a series of technical measures such as to increase its safety and ease of use.

There are currently various connection systems for connecting a tractor to an agricultural machine or equipment, such as the system disclosed in DE4132889A1 comprising two plates interconnectable face-to-face at a relative fixed distance, one of which carries, on its face facing the other plate, a movable connector for transferring hydraulic or electric power or a fluid, a movable power take-off shaft and movable mechanical shear-wise engagement means configured to engage respective counterparts on the opposite plate for releasable mechanical fixation and operative interconnection.

However, these prior art systems have various disadvantages and drawbacks mainly due to the laborious nature of the connection operations, the safety levels which are not always adequate and the poor ease of use.

The aim of the invention is to overcome the above-mentioned problems of the prior art.

Another aim of the invention is to provide a connection system for connecting an agricultural machine or equipment to a tractor, which allows such connection to be provided in a simple and fast way, and without the external aid of an operator.

A further aim of the invention is to provide a connection system for connecting an agricultural equipment or machine to a tractor which has a high level of safety during its use.

Another aim of the invention is to provide a connection system for connecting an agricultural equipment or machine to a tractor which is multipurpose, that is to say, which allows various types of agricultural equipment and machinery to be connected to the tractor.

A further aim of the invention is to provide a connection system for connecting an agricultural equipment or machine to a tractor which is particularly easy to use.

It is, therefore, specific object of the present invention a connection system for connecting an agricultural machine or equipment provided with a power take-off to a tractor provided with a power take-off, said connection system comprising a first component comprising: a first plate wherein a first side and a second side opposite the first side are defined, and wherein at least a first opening, a second opening and at least one through hole are formed; at least one pin positioned at the first side of the first plate and facing said at least one through hole; at least one connector positioned at the first side of the first plate, facing said at least one first opening and configured to allow, in use, transferring electric power or hydraulic power or at least one fluid from said tractor to said agricultural machine or equipment; a first shaft rotatable around a first axis of rotation and provided, at relative ends, with a first connection portion, configured to connect in use to the power take-off of said tractor for the transmission of a driving torque, and a second connection portion facing the second opening and configured to transmit a driving torque; and movement means for simultaneously moving, with respect to the first plate, the at least one pin, the at least one connector and the first shaft between a respective withdrawn disconnection position, wherein the at least one pin, the at least one connector and the first shaft are at a respective first distance from the first plate, and an advanced connection position, wherein the at least one pin, the at least one connector and the first shaft are at a respective second distance, less than the respective first distance, from the first plate; a second component comprising: a second plate wherein a first side and a second side opposite to said first side are defined, and wherein at least one hole is formed configured to receive said at least a pin when the second side of the first plate is positioned facing the second side of the second plate and said at least one pin is in the respective advanced connection position; at least one connector to allow, in use, transferring electric power or hydraulic power or at least one fluid from said tractor to said agricultural machine or equipment, said at least one connector being mounted on the second plate and being configured to couple, removably, to the at least one connector of the first component when the second side of the first plate is positioned facing the second side of the second plate and the at least a connector of the first component is in the respective advanced connection position; and a second shaft mounted on the second plate in a rotatable way around a second axis of rotation and provided, at relative ends, with a first connection portion, configured to connect in use to the power take-off of said agricultural machine or equipment for the transmission of a driving torque, and a second connection portion positioned at the second side of the second plate and configured to connect, removably, to the second connection portion of the first shaft, to transmit a driving torque, when the second side of the first plate is positioned facing the second side of the second plate and the first shaft is in the respective advanced connection position.

Preferred embodiments are defined in the dependent claims.

Features and advantages will be highlighted in more detail by the following description of a preferred but not exclusive embodiment illustrated, purely by way of non-limiting example, in the accompanying drawings, in which:
- Figure 1 is a first axonometric view of a first component of a connection system, according to the invention, for connecting an agricultural equipment or machine to a tractor, in a first configuration;
- Figure 2 is a second axonometric view of the first component shown in Figure 1, in said first configuration;
- Figure 3 is a cross section view of the first component illustrated in Figures 1 and 2, in said first configuration, along a vertical section plane;
- Figure 4 is an axonometric view of the above-mentioned first component, in a second configuration;
- Figure 5 is a further axonometric view of the above-mentioned first component, in said second configuration;
- Figure 6 is a cross section view of the above-mentioned first component, in said second configuration, along a vertical section plane;
- Figure 7 is an axonometric view of a second component of the above-mentioned connection system according to the invention, in a first configuration;
- Figure 8 is a further axonometric view of the second component shown in Figure 7, in said first configuration;
- Figure 9 is a partial exploded axonometric view of the second component;
- Figure 10 is a cross section view of the above-mentioned second component, in said second configuration, along a vertical section plane;
- Figure 11 is an axonometric view of the above-mentioned connection system connection system, according to the invention, for connecting an agricultural equipment or machine to a tractor, in a first configuration;
- Figure 12 is a further axonometric view of the connection system shown in Figure 11, in said first configuration;
- Figure 13 is a side view of the connection system illustrated in Figures 11 and 12, in said first configuration;
- Figure 14 is a partial cross section view of the connection system illustrated in Figures 11 and 12, in said first configuration, along a vertical section plane;
- Figure 15 is a cross section view of the connection system illustrated in Figures 11 and 12, in said first configuration, along another vertical section plane;
- Figure 16 is an axonometric view of the above-mentioned connection system according to the invention, in a second configuration;
- Figure 17 is a further axonometric view of the connection system shown in Figure 16, in said second configuration;
- Figure 18 is a side view of the connection system illustrated in Figures 16 and 17, in said second configuration; and
- Figure 19 is an axonometric section of the connection system illustrated in figures 16, 17 and 18, in said second configuration.

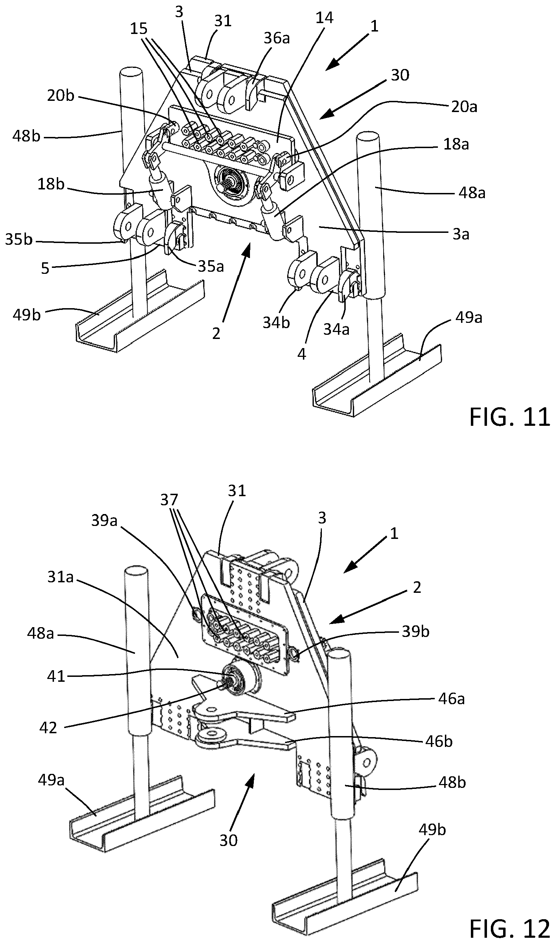

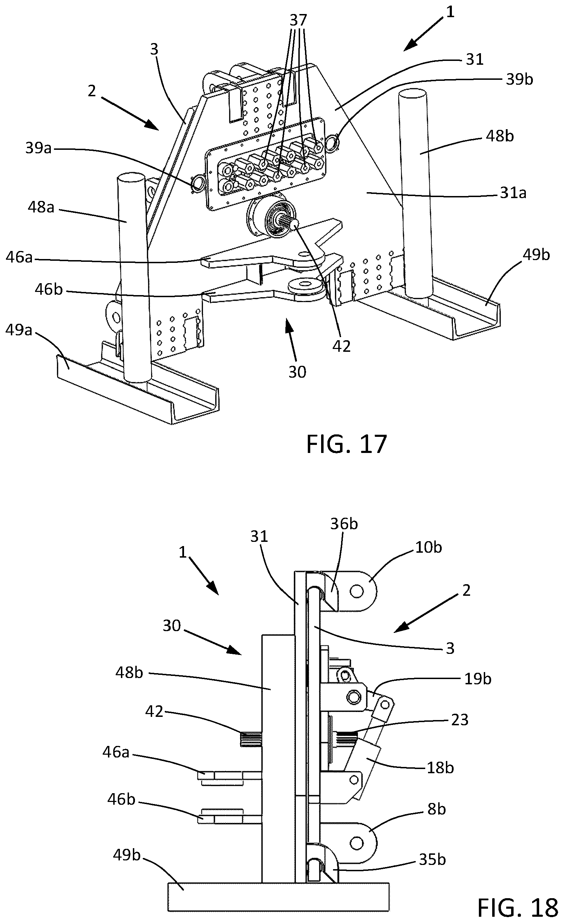

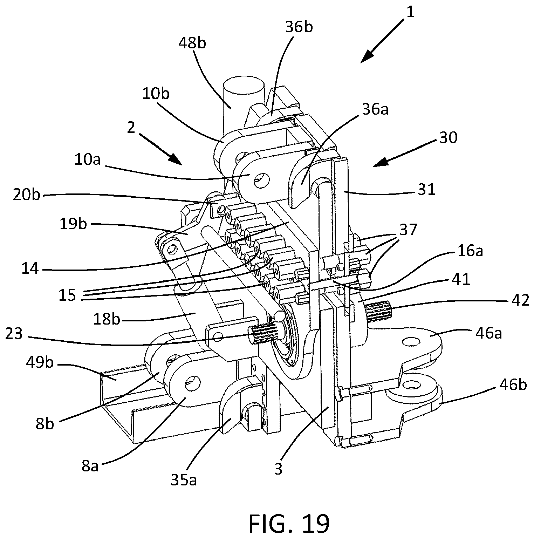

With reference to the accompanying drawings, in particular to Figures 11-19, the numeral 1 denotes a connection system, according to the present invention, for connecting to a tractor (not shown) an agricultural machine or equipment (not shown), such as a transport wagon, a plough, a cutter bar, a round baler, an automatic seeding machine, a windrower, etc.

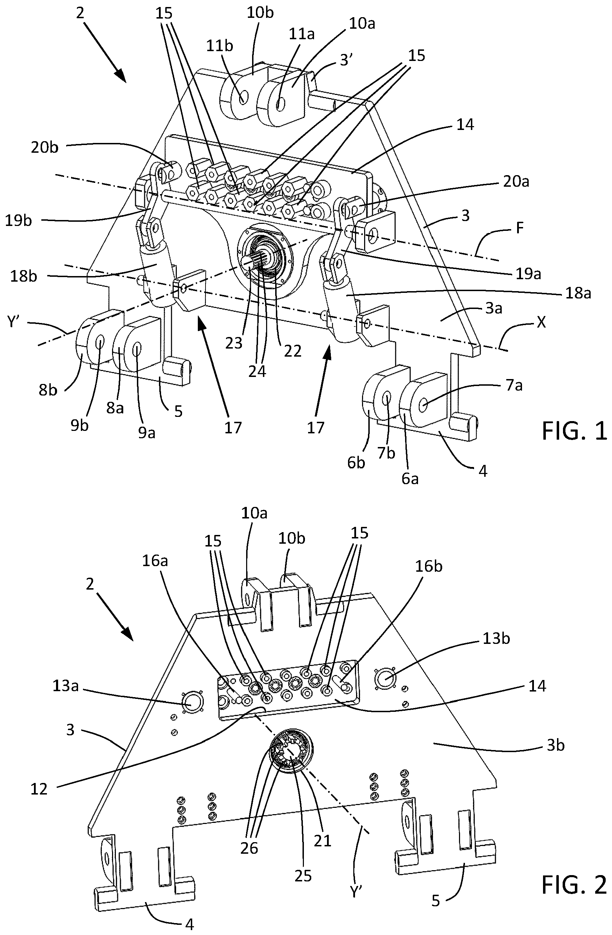

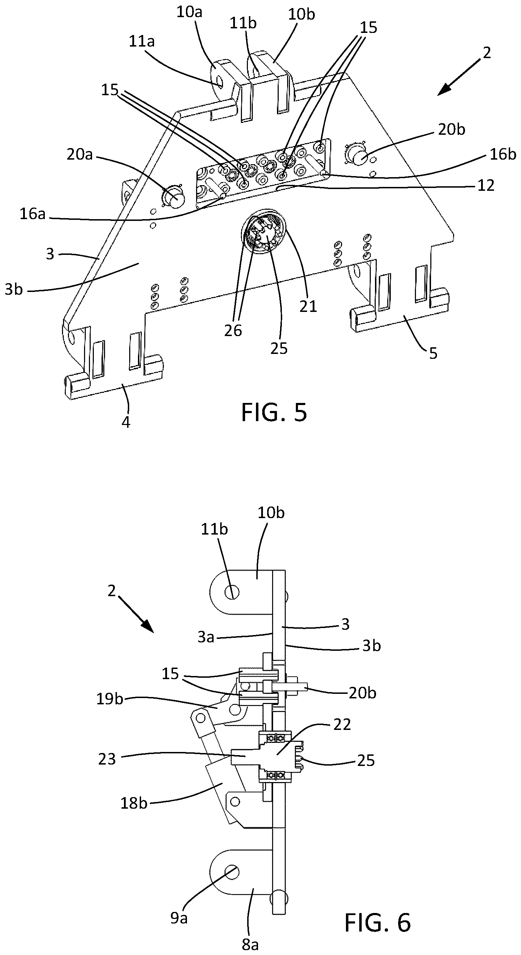

This connection system 1 comprises a first component 2, illustrated in Figures 1-6.

The first component 2 in turn comprises a shaped plate 3, having substantially a trapezoidal shape, wherein a first side 3a and a second side 3b opposite to said first side 3a are defined.

From the lower part of the plate 3 a first appendage 4 and a second appendage 5 extend downwards, spaced apart and parallel to each other, and both having an inverted "T" shape.

From the first appendage 4 a first pair of mutually parallel fins 6a, 6b, with respective through holes 7a, 7b coaxial with each other, extends orthogonally on its corresponding side and coplanar to said first side 3a.

Similarly, from the second appendage 5 a second pair of mutually parallel fins 8a, 8b, with respective through holes 9a, 9b coaxial with each other and with the through holes 7a, 7b, extends orthogonally on its corresponding side and coplanar with said first side 3a of the first pair of fins 6a, 6b.

From the central portion 3', protruding upwards, of the upper part of the plate 3, at the first side 3a, a third pair of mutually parallel fins 10a, 10b extends, in which respective through holes 11a, 11b are formed.

The above-mentioned first pair of fins 6a, 6b, second pair of fins 8a, 8b and third pair of fins 10a, 10b perform the function of allowing the connection of the first component 2 to the rear of a tractor (not shown), at three attachment points of the latter, with the first side 3a of the plate 3 facing towards the tractor itself.

A first opening 12 of substantially rectangular shape, a first through hole 13a arranged alongside a first side of the first opening 12, and a second through hole 13b arranged alongside a second side of the first opening 12 opposite to said first side are formed in the plate 3.

A second circular opening 21 is also provided in the plate 3, in a position lower than the first opening 12.

The first component 2 also comprises a plate-shaped support 14, facing and arranged parallel to the first side 3a of the plate 3, and movable in a direction orthogonal to said first side 3a.

Mounted on the support 14 is a plurality of connectors 15 oriented orthogonally to the support 14 and connectable to the control members present on the tractor.

Specifically, all the connectors of said plurality of connectors 15 are arranged in such positions as to face outwards from the above-mentioned first opening 12.

Said plurality of connectors 15 are connectable, by cables and/or tubes, to supply means of the tractor for supplying electric power and/or hydraulic power and/or compressed air and/or water and/or herbicides and/or other liquids, in order to allow the use of said electric power and/or hydraulic power and/or compressed air and/or water and/or herbicides and/or other liquids in the agricultural machine or equipment connected to the tractor using connection system 1.

The above-mentioned plurality of connectors 15 can also comprise one or more unified ISOBUS sockets if these are required for the correct operation of the above-mentioned agricultural machine or equipment.

On the support 14 there are also provided a first centering pin 16a and a second centering pin 16b, oriented orthogonally to the support 14 itself, the function of which will be described in more detail below.

On the support 14, in a lower position with respect to the plurality of connectors 15, a first shaft 22 is mounted which can rotate around an axis of rotation Y' orthogonal to the plate 3.

The first shaft 22 has, at its respective ends, a first connection portion 23, arranged at the first side 3a of the plate 3 and provided with a first plurality of peripheral grooves 24 parallel to said axis of rotation Y', and a second connection portion 25, facing outwards from the second side 3b of the plate 3 through the second opening 21 and provided with a second plurality of peripheral grooves 26 which are also parallel to said axis of rotation Y'.

Specifically, the first connection portion 23 of the first shaft 22 serves, in fact, to allow the connection with the power take-off present on the tractor, for the transmission of the driving torque from said power take-off to the first shaft 22 of the first component 2; the function of the above-mentioned second connection portion 25 will be described in detail below.

The first component 2 also includes a movement system 17 for moving the support 14 with respect to the plate 3 according to an axis orthogonal to the latter.

In particular, the movement system 17 comprises a first hydraulic cylinder 18a (that is, a first piston-cylinder system of the hydraulic type) and a second hydraulic cylinder 18b (that is, a second piston-cylinder system of the hydraulic type) mutually parallel, arranged under the support 14 and connected to plate 3 in a rotatable manner around a first horizontal axis of rotation X (when the first component 2 is mounted on the tractor) parallel to the plate 3 itself.

The first hydraulic cylinder 18a and the second hydraulic cylinder 18b are respectively connected, in a rotatable manner about an axis of rotation parallel to said first axis of rotation X, to the corresponding lower end of a first rocker arm 19a and of a second rocker arm 19b each shaped in the form of a "V" and mounted, in a rotatable manner around a second axis of rotation F parallel to the first axis of rotation X, on a U-shaped bracket fixed on the first side 3a of the plate 3.

Specifically, the pivot of the first rocker 19a and of the second rocker 19b is identified at the vertex of the respective V-shaped structure, obviously on the above-mentioned second axis of rotation F.

Moreover, the first rocker 19a and the second rocker 19b are respectively connected, at the relative upper end, in a rotatable manner about an axis of rotation parallel to said second axis of rotation F, to a first locking pin 20a and to a second locking pin 20b fixed to the support 14 and protruding from the side of the latter facing the first side 3a of the plate 3, respectively, at the above-mentioned first through hole 13a and second through hole 13b.

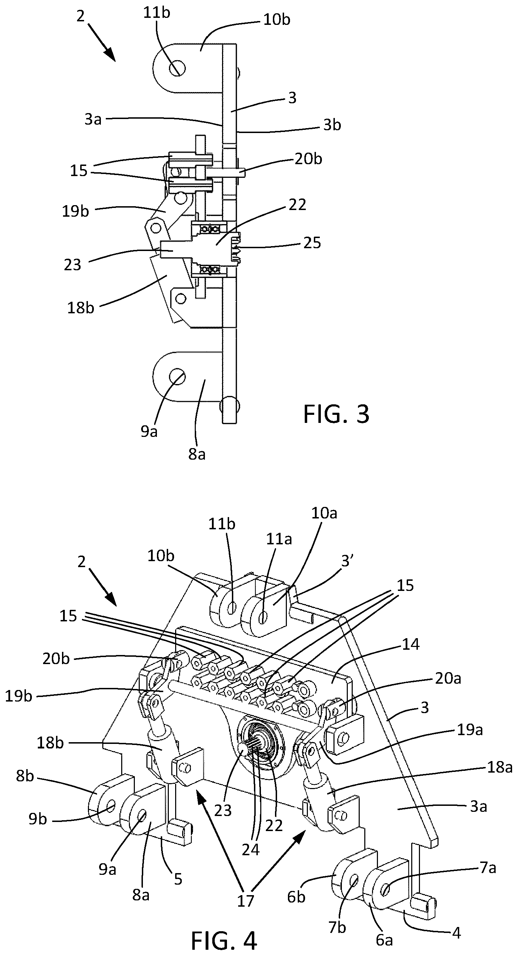

The first hydraulic cylinder 18a and the second hydraulic cylinder 18b can be connected to a hydraulic drive system mounted on board the tractor and controlled by means of control elements present in the tractor itself in such a way as to be able to move the support 14, by means of the actuation of said first hydraulic cylinder 18a and second hydraulic cylinder 18b and of the relative first rocker 19a and second rocker 19b, orthogonally to the first side 3a of the plate 3 between a withdrawn disconnection position (see Figures 1-3), wherein the first locking pin 20a and the second locking pin 20b pass through the first through hole 13a and the second through hole 13b, respectively, not protruding or protruding minimally from the second side 3b of the plate 3, and an advanced connection position (see Figures 4-6), wherein the first locking pin 20a and the second locking pin 20b pass through the first through hole 13a and the second through hole 13b, respectively, protruding for a substantial length from the above-mentioned second side 3b.

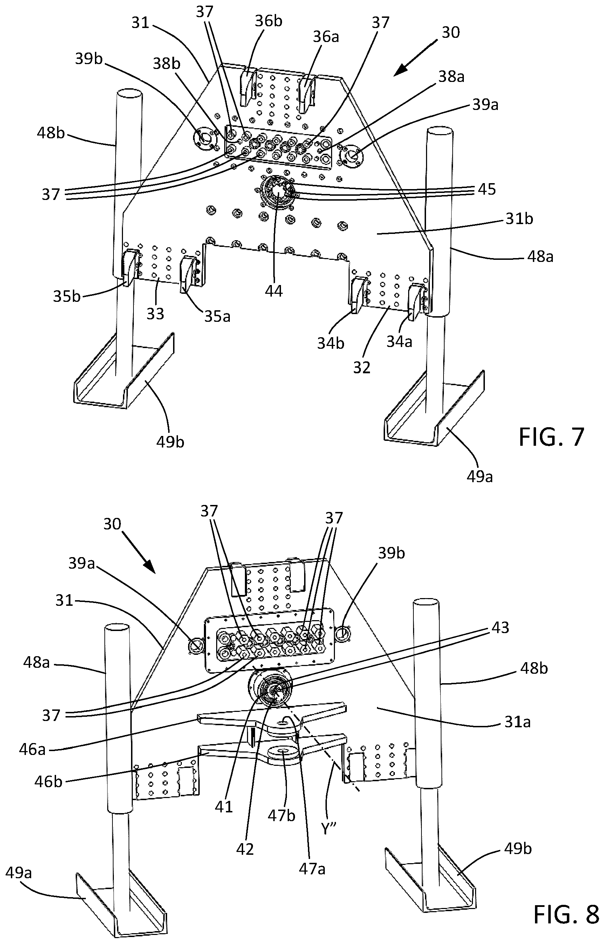

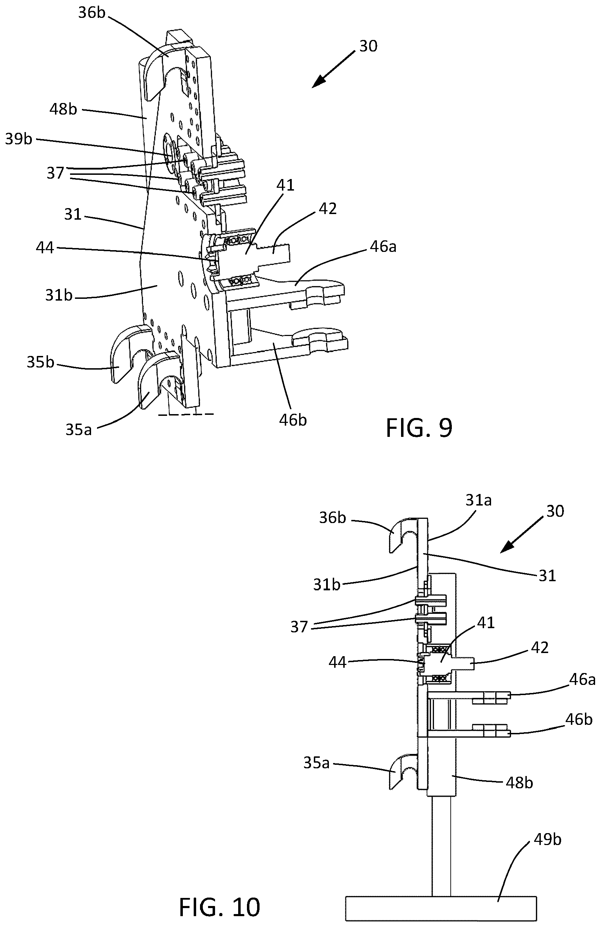

The connection system 1 also comprises a second component 30, shown in Figures 7-10.

The second component 30 includes a shaped plate 31, substantially having a trapezoidal shape, wherein a first side 31a and a second side 31b opposite to said first side 31a are defined.

From the lower part of the plate 31a first appendage 32 and a second appendage 33 extend downwards, spaced apart and parallel to each other.

From the first appendage 32 a first pair of hooks 34a, 34b parallel and spaced apart and facing downwards extends orthogonally on its corresponding side and coplanar to said second side 31b so as to be able to receive in use, in the space between them, the narrowest portion of the first appendage 4 of the first component 2 and to be hooked to the lower, wider portion of the same first appendage 4 (see figures 11, 13, 14, 15, 16, 18).

Similarly, from the second appendage 33 a second pair of hooks 35a, 35b parallel and spaced apart and facing downwards extends orthogonally on its corresponding side and coplanar to said second side 31b so as to be able to receive in use, in the space between them, the narrowest portion of the second appendage 5 of the first component 2 and to be hooked to the lower, wider portion of the same second appendage 5 (see figures 11, 13, 14, 15, 16, 18).

From the central area of the top part of the second side 31b of the plate 31a third pair of hooks 36a, 36b parallel and spaced from each other and facing downwards extends, orthogonally, so as to be able to receive in use, in the space between them, the central portion 3' of the plate 3 of the first component 2 and to be hooked to the upper edge of the same plate 3 (see Figures 11, 13, 14, 15, 16, 18).

In the plate 31 of the second component 30 a plurality of connectors 37 is provided, oriented orthogonally to it and connectable to the operating and/or auxiliary members present on the agricultural machine or equipment on which said second component 30 is mounted.

The plurality of connectors 37 of the second component 30 is also configured to connect to the above-mentioned plurality of connectors 15 of the first component 2 by activating the movement system 17 described above, when these two components 2, 30 are mutually coupled.

Each connector, for hydraulic or pneumatic use, of the plurality of connectors 15 of the first component 2 and of the plurality of connectors 37 of the second component 30 is also provided with a respective valve to enable or interrupt, respectively, the flow of the fluid passing through it depending on whether the plurality of connectors 15 of the first component 2 is connected or disconnected from the plurality of connectors 37 of the second component 30.

In the same area of the plate 31 where the plurality of connectors 37 is present, a first hole 38a and a second hole 38b are made, intended to receive, respectively, the first centering pin 16a and the second centering pin 16b through the actuation of the above-mentioned movement system 17, when the first component 2 and the second component 30 are mutually coupled, so as to favour the alignment and correct connection between the plurality of connectors 15 of the first component 2 and the plurality of connectors 37 of the second component 30.

In particular, the alignment action performed by the first 16a and the second 16b centering pin is particularly useful and advantageous for the connection of ISOBUS type connectors.

A first through hole 39a and a second through hole 39b are respectively formed in the same plate 31, on the opposite sides of the region where the plurality of connectors 37 is provided, intended to receive, respectively, the first locking pin 20a and the second locking pin 20b of the first component 2 by activating the above-mentioned movement system 17, when the first component 2 and the second component 30 are mutually coupled.

In the plate 31, in a lower position with respect to the relative plurality of connectors 37, a second shaft 41 is mounted which can rotate around an axis of rotation Y" orthogonal to the plate 31 itself.

The second shaft 41 has, at its respective ends, a first connection portion 42, arranged at the first side 31a of the plate 31 and provided with a first plurality of peripheral grooves 43 parallel to said axis of rotation Y", and a second connection portion 44, facing outwards from the second side 31b of the plate 31 and provided with a second plurality of peripheral grooves 45 which are also parallel to said axis of rotation Y".

Specifically, the first connection portion 42 of the second shaft 41 serves, in fact, to allow the connection with the power take-off provided in the agricultural machine or equipment (on which this second component 30 is mounted) and connected to the operating members of the latter, to allow the movement and therefore operation.

In particular, the connection between the first connection portion 42 of the second shaft 41 and the power take-off of the agricultural machine or equipment is such as to allow the transmission of a driving torque from the second shaft 41 to said power take-off.

The second connection portion 44 of the second shaft 41 is, on the other hand, configured in such a way as to allow the coupling with the second connection portion 25 of the above-mentioned first shaft 22 when the first component 2 and the second component 30 are mutually coupled and the above-mentioned movement system 17 is activated for bringing the support 14 from the relative withdrawn disconnection position (see Figures 1-3) to the advanced connection position (see Figures 4-6).

On the first side 31a of the plate 31, under the second shaft 41, there is also a pair of horizontal wings 46a, 46b in which respective vertical and mutually coaxial through holes 47a, 47b are formed, to allow the connection to the above-mentioned agricultural machine or equipment.

A first hydraulic cylinder 48a (that is, a first piston-cylinder system of the hydraulic type) and a second hydraulic cylinder 48b (that is, a second piston-cylinder system of the hydraulic type) are respectively fixed vertically (that is, having respective straight lines of action parallel to the plane of the plate 31 itself) to the two lateral sides of the plate 31 and provided, at the bottom, with respective support feet 49a, 49b to allow them to rest on the ground.

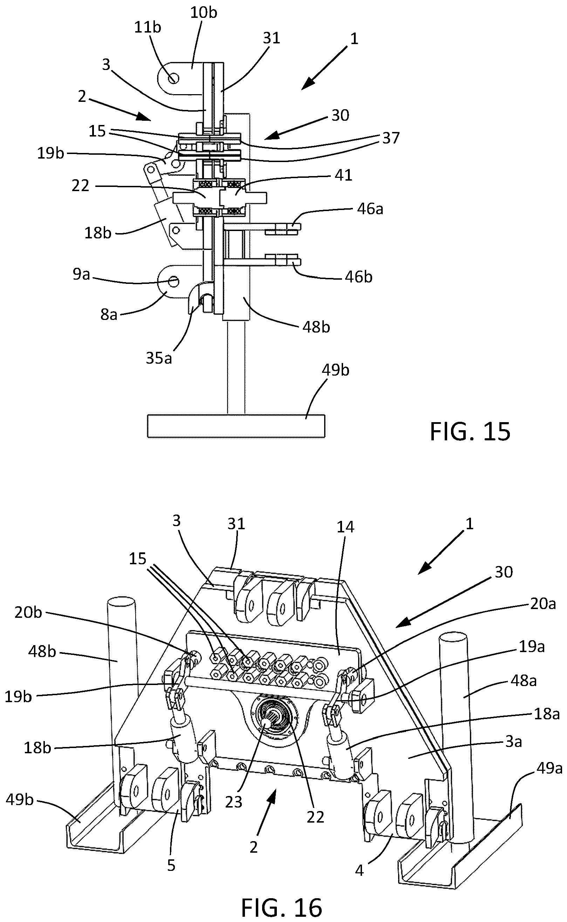

In particular, the first hydraulic cylinder 48a and the second hydraulic cylinder 48b with the relative support feet 49a, 49b allow the second component 30 to be placed on the ground when not in use and to raise the same support feet 49a, 49b (see Figures 16, 17, 18 and 19) in operating conditions of the above-mentioned agricultural machine or equipment, in particular when the operations carried out by the latter require a reduced vertical dimension of the second component 30.

In order to use the connection system 1 described above, it is firstly necessary to mount and secure, respectively, the first component 2 to the tractor and the second component 30 to the agricultural machine or equipment to be used, leaving facing outwards the second side 3b of the plate 3 of the first component 2 and the second side 31b of the plate 31 of the second component 30.

Following this, it is possible to connect the cables and tubes of the above-mentioned supply means present in the tractor to the plurality of connectors 15 of the first component 2, and to connect the cables and tubes of the operative means present in the agricultural machine or equipment to the plurality of connectors 37 of the second component 30.

Subsequently, through one or more approach manoeuvres of the tractor, the plate 3 of the first component 2 is brought into contact with the plate 31 of the second component 30 allowing the first pair of hooks 34a, 34b, the second pair of hooks 35a, 35b and the third pair of hooks 36a, 36b to hook, respectively, to the lower, wider portion of the first appendage 4, to the lower, wider portion of the second appendage 5 and to the upper edge of the above-mentioned plate 3 (see Figures 11 and 12).

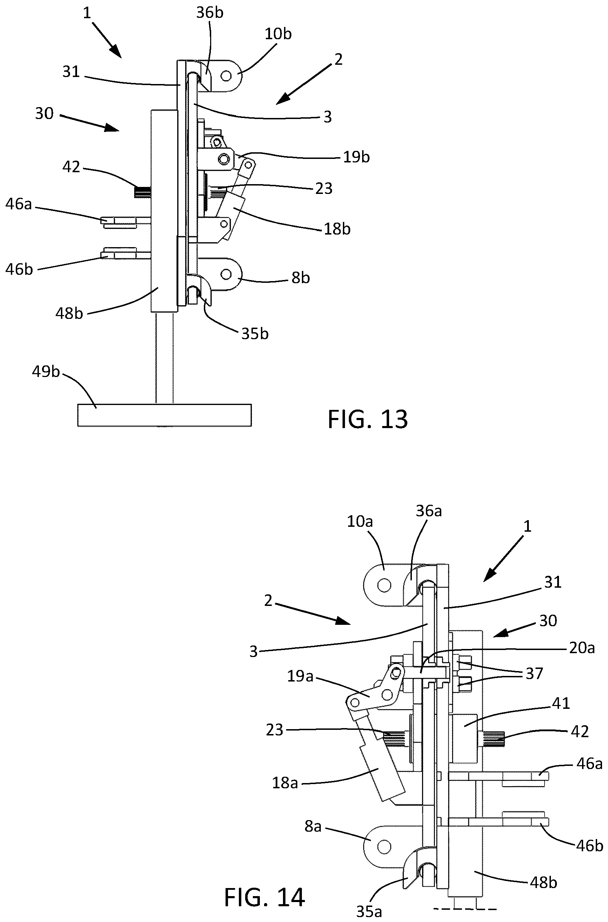

At this point, it is possible to actuate the movement system 17 of the first component 2 so as to move the support 14 from the withdrawn disconnection position to the advanced connection position, thus determining, with a single movement, the reciprocal connection between the plurality of connectors 15 of the first component 2 and the plurality of connectors 37 of the second component 30, the insertion of the first centering pin 16a in the first hole 38a and of the second centering pin 16b in the second hole 38b, the reciprocal connection between the second connection portion 25 of the first shaft 22 and the second connection portion 44 of the second shaft 41, and the insertion of the first locking pin 20a in the first through hole 39a and of the second locking pin 20b in the second through hole 39b (ref. Figures 13, 14 and 15).

The locking action of the first 20a and second 20b locking pin, in combination with the gripping action of the first 34a, 34b, second 35a, 35b and third 36a, 36b pair of hooks, prevents the first component 2 and the second component 30 from separating from each other.

Once the use of the above-mentioned agricultural machine or equipment has been completed, in order to separate the first component 2 and the second component 30 of the connection system 1 from each other, it will be sufficient to actuate the movement system 17 again to arrange the movement of the support 14 from the advanced connection position to the withdrawn disconnection position, place the support feet 49a, 49b of the first 48a and the second 48b hydraulic cylinder on the ground and carry out the necessary manoeuvres with the tractor to release the first 34a, 34b, the second 35a, 35b and the third 36a, 36b pair of hooks.

As can be seen from the above description, the connection system 1 described above has a structure such as to be particularly easy to use, while ensuring a high level of safety.

The movement system 17 provided in the first component 2 makes it possible, in fact, to achieve simultaneously and in a simple, effective and safe manner the reciprocal locking between the first component 2 and the second component 30, as well as the reciprocal connection between the plurality of connectors 15 of the first component 2 and the plurality of connectors 37 of the second component 30, and also the reciprocal connection between the first shaft 22 of the first component 2 and the second shaft 41 of the second component 30 for the transmission of a torque for the operation of the operating members provided in the same agricultural machine or equipment.

The movement system 17 itself has a particularly simple structure and operation, so much so that it can be operated with a single command by the driver of the tractor, avoiding the need for the latter to operate several commands to achieve mutual connection between the first component 2 and the second component 30 and the mutual connection between the plurality of connectors 15 of the first component 2 and the plurality of connectors 37 of the second component 30.

The characteristics of simplicity and the basic nature highlighted above also lead to a significant reduction in costs for the production of the connection system 1.

Furthermore, thanks to the provision of the first centering pin 16a and of the second centering pin 16b and of the related first hole 38a and second hole 38b, possible risks of jamming or damage to the above-mentioned connectors are prevented during the reciprocal connection movement between the plurality of connectors 15 of the first component 2 and the plurality of connectors 37 of the second component 30.

The above description is only given by way of a non-limiting example. The scope of protection is only defined by the appendend claims.

## Claims

1. A connection system (1) for connecting an agricultural machine or equipment provided with a power take-off to a tractor provided with a power take-off, said connection system (1) comprising:
- a first component (2) comprising:
• a first plate (3) wherein a first side (3a) and a second side (3b) opposite the first side (3a) are defined, and wherein at least a first opening (12), a second opening (21) and at least one through hole (13a, 13b) are formed;
• at least one pin (20a, 20b) positioned at the first side (3a) of the first plate (3) and facing said at least one through hole (13a, 13b);
• at least one connector (15) positioned at the first side (3a) of the first plate (3), facing said at least one first opening (12) and configured to allow, in use, transferring electric power or hydraulic power or at least one fluid from said tractor to said agricultural machine or equipment;
• a first shaft (22) rotatable around a first axis of rotation (Y') and provided, at relative ends, with a first connection portion (23), configured to connect in use to the power take-off of said tractor for the transmission of a driving torque, and a second connection portion (25) facing the second opening (21) and configured to transmit a driving torque; and
• movement means (17) for simultaneously moving, with respect to the first plate (3), the at least one pin (20a, 20b), the at least one connector (15) and the first shaft (22) between a respective withdrawn disconnection position, wherein the at least one pin (20a, 20b), the at least one connector (15) and the first shaft (22) are at a respective first distance from the first plate (3), and an advanced connection position, wherein the at least one pin (20a, 20b), the at least one connector (15) and the first shaft (22) are at a respective second distance, less than the respective first distance, from the first plate (3);
- a second component (30) comprising:
• a second plate (31) wherein a first side (31a) and a second side (31b) opposite to said first side (31a) are defined, and wherein at least one hole (39a, 39b) is formed configured to receive said at least a pin (20a, 20b) when the second side (3b) of the first plate (3) is positioned facing the second side (31b) of the second plate (31) and said at least one pin (20a, 20b) is in the respective advanced connection position;
• at least one connector (37) to allow, in use, transferring electric power or hydraulic power or at least one fluid from said tractor to said agricultural machine or equipment, said at least one connector (37) being mounted on the second plate (31) and being configured to couple, removably, to the at least one connector (15) of the first component (2) when the second side (3b) of the first plate (3) is positioned facing the second side (31b) of the second plate (31) and the at least a connector (15) of the first component (2) is in the respective advanced connection position; and
• a second shaft (41) mounted on the second plate (31) in a rotatable way around a second axis of rotation (Y") and provided, at relative ends, with a first connection portion (42), configured to connect, in use, to the power take-off of said agricultural machine or equipment for the transmission of a driving torque, and a second connection portion (44) positioned at the second side (31b) of the second plate (31) and configured to connect, removably, to the second connection portion (25) of the first shaft (22), to transmit a driving torque, when the second side (3b) of the first plate (3) is positioned facing the second side (31b) of the second plate (31) and the first shaft (22) is in the respective advanced connection position.

2. The connection system (1) according to claim 1, **characterised in that** the first axis of rotation (Y') is substantially orthogonal to the support (14) and the second axis of rotation (Y") is substantially orthogonal to the second plate (31).

3. The connection system (1) according to any one of the preceding claims, **characterised in that** the at least one pin (20a, 20b), the at least one connector (15) of the first component (2) and the first shaft (22) are mounted on the same support (14) facing the first side (3a) of the first plate (3).

4. The connection system (1) according to any one of the preceding claims, **characterised**
**in that** the first component (2) comprises at least one centering pin (16a, 16b) connected to the movement means (17) in such a way that said at least one centering pin (16a, 16b) can be moved by the movement means (17) between a withdrawn disconnection position and an advanced connection position simultaneously with the movements of the at least one pin (20a, 20b), the at least one connector (15) and the first shaft (22) between the respective withdrawn disconnection position and the respective advanced connection position, and
**in that** in the second component (30) there is at least one hole (38a, 38b) configured to receive the at least one centering pin (16a, 16b), to facilitate the mutual connection between the at least one connector (15) of the first component (2) and the at least one connector (37) of the second component (30), when the second side (3b) of the first plate (3) is positioned facing the second side (31b) of the second plate (31) and the at least one centering pin (16a, 16b) is in the respective advanced connection position.

5. The connection system (1) according to any one of the preceding claims, **characterised in that** the movement means (17) comprise at least one piston-cylinder system (18a, 18b), rotatably connected to the first plate (3), and at least one rocker arm (19a, 19b) rotatably connected to the first plate (3) and to said at least one piston-cylinder system (18a, 18b).

6. The connection system (1) according to any one of the preceding claims, **characterised in that** the first component (2) or the second component (30) comprises hooking means (34a, 34b, 35a, 35b, 36a, 36b) to achieve the coupling between the first component (2) and the second component (30).

7. The connection system (1) according to claim 6, **characterised in that** the hooking means (34a, 34b, 35a, 35b, 36a, 36b) are connected to the second plate (31).

8. The connection system (1) according to claim 6 or 7, **characterised in that** the hooking means (34a, 34b, 35a, 35b, 36a, 36b) are positioned at the vertices of a triangle.

9. The connection system (1) according to any one of the preceding claims, **characterised in that** the second component (30) comprises at least one piston-cylinder system (48a, 48b) for raising and lowering the second plate (31); said at least one piston-cylinder system (48a, 48b) being connected to the second plate (31) and positioned substantially parallel to the plane of the second plate (31).

10. The connection system (1) according to any one of the preceding claims, **characterised in that** the second connection portion (25) of the first shaft (22) has at least one peripheral groove (26) substantially parallel to the first axis of rotation (Y'), and **in that** the second connecting portion (44) of the second shaft (41) has at least one peripheral groove (45) substantially parallel to the second axis of rotation (Y").

11. The connection system (1) according to any one of the preceding claims, **characterised in that** the at least one connector (15) of the first component (2) and/or the at least one connector (37) of the second component (30) comprise at least one valve for automatically enabling the flow of a fluid through said at least one valve when the at least one connector (15) of the first component (2) and the at least one connector (37) of the second component (30) are mutually connected, and to automatically interrupt the flow of a fluid when the at least one connector (15) of the first component (2) and the at least one connector (37) of the second component (30) are mutually disconnected.

12. The connection system (1) according to any one of the preceding claims, **characterised in that** the at least one connector (15) of the first component (2) and/or the at least one connector (37) of the second component (30) comprise at least an ISOBUS type connector.

13. The connection system (1) according to any one of the preceding claims, **characterised in that** the first component (2) comprises first connection means (6a, 7a, 6b, 7b, 8a, 9a, 8b, 9b, 10a, 11a, 10b, 11b) configured to connect, in use, to a tractor, and **in that** the second component (30) comprises second connection means (46a, 47a, 46b, 47b) configured to connect, in use, to an agricultural machine or equipment.

## Patentansprüche

1. Ein Verbindungssystem (1) zum Anschluss einer landwirtschaftlichen Maschine oder Ausrüstung, die mit einer Zapfwelle versehen ist, an einen mit einer Zapfwelle versehenen Traktor, wobei besagtes Verbindungssystem (1) Folgendes umfasst:
- eine erste Komponente (2), umfassend:
• eine erste Platte (3), in der eine erste Seite (3a) und eine zweite Seite (3b) gegenüber der ersten Seite (3a) definiert sind und in der mindestens eine erste Öffnung (12), eine zweite Öffnung (21) und mindestens eine Durchgangsbohrung (13a, 13b) ausgebildet sind;
• mindestens einen Stift (20a, 20b), der an der ersten Seite (3a) der ersten Platte (3) positioniert ist und besagter mindestens einen Durchgangsbohrung (13a, 13b) gegenüber liegt;
• mindestens einen Steckverbinder (15), der an der ersten Seite (3a) der ersten Platte (3) positioniert ist, dieser mindestens einen ersten Öffnung (12) gegenüber liegt und so konfiguriert ist, dass im Betrieb elektrische oder hydraulische Energie oder mindestens eine Flüssigkeit vom Traktor auf besagte landwirtschaftliche Maschine oder Ausrüstung übertragen werden kann;
• eine erste Welle (22), die um eine erste Drehachse (Y') drehbar ist und an den relativen Enden mit einem ersten Anschlussteil (23) versehen ist, der so konfiguriert ist, dass sie im Betrieb an die Zapfwelle des genannten Traktors zur Übertragung eines Antriebsdrehmoments angeschlossen wird, und ein zweiter Anschlussteil (25), der der zweiten Öffnung (21) gegenüberliegt, und so konfiguriert ist, dass er ein Antriebsdrehmoment überträgt, und
• Bewegungsmittel (17) zur gleichzeitigen Bewegung in Bezug auf die erste Platte (3) besagten mindestens einen Stifts (20a, 20b), der mindestens einen Steckverbindung (15) und der ersten Welle (22) zwischen einer entsprechenden herausgezogenen Trennposition, wobei besagter mindestens eine Stift (20a, 20b), die mindestens eine Steckverbindung (15) und die erste Welle (22) sich in einem entsprechenden ersten Abstand von der ersten Platte (3) befinden, und einer fortgeschrittenen Anschlussposition, in der sich der mindestens eine Stift (20a, 20b), die mindestens eine Steckverbindung (15) und die erste Welle (22) in einem entsprechenden zweiten Abstand von der ersten Platte (3) befinden, der kleiner ist als der entsprechende erste Abstand;
- eine zweite Komponente (30), umfassend:
• eine zweite Platte (31), in der eine erste Seite (31a) und eine zweite Seite (31b) gegenüber der ersten Seite (31a) definiert sind, und in der mindestens eine Bohrung (39a, 39b) ausgebildet ist, die so konfiguriert ist, dass sie besagten mindestens einen Stift (20a, 20b) aufnimmt, wenn die zweite Seite (3b) der ersten Platte (3) gegenüber der zweiten Seite (31b) der zweiten Platte (31) positioniert ist und sich der mindestens eine Stift (20a, 20b) in der entsprechenden fortgeschrittenen Verbindungsposition befindet;
• mindestens einen Steckverbinder (37), der im Betrieb die Übertragung von elektrischer oder hydraulischer Energie oder mindestens einer Flüssigkeit vom Traktor auf besagte landwirtschaftliche Maschine oder Ausrüstung ermöglicht, wobei besagter mindestens eine Steckverbinder (37) auf der zweiten Platte (31) montiert und so konfiguriert ist, dass er abnehmbar an den mindestens einen Steckverbinder (15) der ersten Komponente (2) gekoppelt ist, wenn die zweite Seite (3b) der ersten Platte (3) gegenüber der zweiten Seite (31b) der zweiten Platte (31) positioniert ist und sich der mindestens eine Steckverbinder (15) der ersten Komponente (2) in der entsprechenden fortgeschrittenen Anschlussposition befindet, und
• eine zweite Welle (41), die auf der zweiten Platte (31) drehbar um eine zweite Drehachse (Y") angeordnet ist und an relativen Enden mit einem ersten Anschlussteil (42) versehen ist, der so konfiguriert ist, dass er im Betrieb mit der Zapfwelle der besagten landwirtschaftlichen Maschine oder Ausrüstung zur Übertragung eines Antriebsdrehmoments verbunden ist, und einen zweiten Anschlussteil (44), der auf der zweiten Seite (31b) der zweiten Platte (31) positioniert ist und so konfiguriert ist, dass er abnehmbar mit dem zweiten Anschlussteil (25) der ersten Welle (22) verbunden ist, um ein Antriebsmoment zu übertragen, wenn die zweite Seite (3b) der ersten Platte (3) gegenüber der zweiten Seite (31b) der zweiten Platte (31) positioniert ist und sich die erste Welle (22) in der entsprechenden fortgeschrittenen Anschlussposition befindet.

2. Das Verbindungssystem (1) nach Anspruch 1, **dadurch gekennzeichnet, dass** die erste Drehachse (Y') im Wesentlichen orthogonal zum Träger (14) und die zweite Drehachse (Y") im Wesentlichen orthogonal zur zweiten Platte (31) steht.

3. Das Verbindungssystem (1) nach einem beliebigen der vorstehenden Ansprüche, **dadurch gekennzeichnet, dass** der mindestens eine Stift (20a, 20b), der mindestens eine Anschlussverbinder (15) der ersten Komponente (2) und die erste Welle (22) auf demselben Träger (14) angebracht sind und sich gegenüber der ersten Seite (3a) der ersten Platte (3) befinden.

4. Das Verbindungssystem (1) nach einem beliebigen der vorstehenden Ansprüche, **dadurch gekennzeichnet, dass**
die erste Komponente (2) mindestens einen Zentrierstift (16a, 16b) aufweist, der mit den Bewegungsmitteln (17) so verbunden ist, dass besagter mindestens eine Zentrierstift (16a, 16b) von den Bewegungsmitteln (17) bewegt werden kann zwischen einer herausgezogenen Trennposition und einer fortgeschrittenen Anschlussposition, gleichzeitig mit den Bewegungen des mindestens einen Stifts (20a, 20b), des mindestens einen Steckverbinders (15) und der ersten Welle (22) zwischen der jeweiligen herausgezogenen Trennposition und der jeweiligen fortgeschrittenen Anschlussposition, und
darin, dass in der zweiten Komponente (30) mindestens eine Bohrung (38a, 38b) ausgebildet ist, um den mindestens einen Zentrierstift (16a, 16b) aufzunehmen, um die gegenseitige Verbindung zwischen dem mindestens einem Stecker (15) der ersten Komponente (2) und dem mindestens einem Stecker (37) der zweiten Komponente (30) zu erleichtern, wenn die zweite Seite (3b) der ersten Platte (3) gegenüber der zweiten Seite (31b) der zweiten Platte (31) positioniert ist und sich der mindestens eine Zentrierstift (16a, 16b) in der jeweiligen fortgeschrittenen Verbindungsposition befindet.

5. Das Verbindungssystem (1) nach einem beliebigen der vorstehenden Ansprüche, **dadurch gekennzeichnet, dass** die Bewegungsmittel (17) mindestens ein Kolbenzylindersystem (18a, 18b) umfassen, das drehbar mit der ersten Platte (3) verbunden ist, und mindestens einen Kipparm (19a, 19b), der drehbar mit der ersten Platte (3) und mit besagtem mindestens einen Kolbenzylindersystem (18a, 18b) verbunden ist.

6. Das Verbindungssystem (1) nach einem beliebigen der vorstehenden Ansprüche, **dadurch gekennzeichnet, dass** die erste Komponente (2) oder die zweite Komponente (30) Befestigungsmittel (34a, 34b, 35a, 35b, 36a, 36b) umfasst, um die Verbindung zwischen der ersten Komponente (2) und der zweiten Komponente (30) zu erreichen.

7. Das Verbindungssystem (1) nach Anspruch 6, **dadurch gekennzeichnet, dass** die Befestigungsmittel (34a, 34b, 35a, 35b, 36a, 36b) mit der zweiten Platte (31) verbunden sind.

8. Das Verbindungssystem (1) nach Anspruch 6 oder 7, **dadurch gekennzeichnet, dass** die Befestigungsmittel (34a, 34b, 35a, 35b, 36a, 36b) an den Eckpunkten eines Dreiecks positioniert sind.

9. Das Verbindungssystem (1) nach einem beliebigen der vorstehenden Ansprüche, **dadurch gekennzeichnet, dass** die zweite Komponente (30) mindestens ein Kolbenzylindersystem (48a, 48b) zum Anheben und Absenken der zweiten Platte (31) umfasst, wobei besagtes mindestens eine Kolbenzylindersystem (48a, 48b) mit der zweiten Platte (31) verbunden und im Wesentlichen parallel zur Ebene der zweiten Platte (31) positioniert ist.

10. Das Verbindungssystem (1) nach einem beliebigen der vorstehenden Ansprüche, **dadurch gekennzeichnet, dass** der zweite Verbindungsteil (25) der ersten Welle (22) mindestens eine Umfangsnut (26) aufweist, die im Wesentlichen parallel zur ersten Drehachse (Y') verläuft, und dass der zweite Verbindungsteil (44) der zweiten Welle (41) mindestens eine Umfangsnut (45) aufweist, die im Wesentlichen parallel zur zweiten Drehachse (Y") verläuft.

11. Das Verbindungssystem (1) nach einem beliebigen der vorstehenden Ansprüche, **dadurch gekennzeichnet, dass** der mindestens eine Steckverbinder (15) der ersten Komponente (2) und/oder der mindestens eine Steckverbinder (37) der zweiten Komponente (30) mindestens ein Ventil umfasst, das den Durchfluss einer Flüssigkeit durch besagtes mindestens eine Ventil automatisch ermöglicht, wenn der mindestens eine Steckverbinder (15) der ersten Komponente (2) und der mindestens eine Steckverbinder (37) der zweiten Komponente (30) miteinander verbunden sind, und den Durchfluss einer Flüssigkeit automatisch unterbricht, wenn der mindestens eine Steckverbinder (15) der ersten Komponente (2) und der mindestens eine Steckverbinder (37) der zweiten Komponente (30) voneinander getrennt sind.

12. Das Verbindungssystem (1) nach einem beliebigen der vorstehenden Ansprüche, **dadurch gekennzeichnet, dass** der mindestens eine Steckverbinder (15) der ersten Komponente (2) und/oder der mindestens eine Steckverbinder (37) der zweiten Komponente (30) mindestens einen ISOBUS-Typ-Steckverbinder umfasst.

13. Das Verbindungssystem (1) nach einem beliebigen der vorstehenden Ansprüche, **dadurch gekennzeichnet, dass** die erste Komponente (2) erste Verbindungsmittel (6a, 7a, 6b, 7b, 8a, 9a, 8b, 9b, 10a, 11a, 10b, 11b) umfasst, die für den Anschluss, im Betrieb, an einen Traktor konfiguriert sind, und dass die zweite Komponente (30) zweite Verbindungsmittel (46a, 47a, 46b, 47b) umfasst, die für den Anschluss, im Betrieb, an eine landwirtschaftliche Maschine oder Ausrüstung konfiguriert sind.

## Revendications

1. Un système de liaison (1) pour relier une machine agricole ou un équipement agricole muni d'une prise de force à un tracteur muni d'une prise de force, ledit système de liaison (1) comprenant:
- un premier élément (2) comprenant:
• une première plaque (3) dans laquelle un premier côté (3a) et un deuxième côté (3b) opposé au premier côté (3a) sont définis, et dans laquelle au moins une première ouverture (12), une deuxième ouverture (21) et au moins un trou traversant (13a, 13b) sont formés;
• au moins une broche (20a, 20b) positionnée sur le premier côté (3a) de la première plaque (3) et faisant face audit au moins un trou traversant (13a, 13b);
• au moins un connecteur (15) positionné sur le premier côté (3a) de la première plaque (3), face à ladite au moins une première ouverture (12) et configuré pour permettre, en utilisation, un transfert d'énergie électrique ou d'énergie hydraulique ou d'au moins un fluide dudit tracteur vers ladite machine agricole ou ledit équipement agricole;
• un premier arbre (22) pouvant tourner autour d'un premier axe de rotation (Y') et pourvu, à des extrémités correspondantes, d'une première portion de liaison (23), configurée pour se relier en utilisation à la prise de force dudit tracteur pour la transmission d'un couple d'entraînement, et d'une deuxième portion de liaison (25) faisant face à la deuxième ouverture (21) et configurée pour transmettre un couple d'entraînement; et
• des moyens de déplacement (17) pour déplacer simultanément, par rapport à la première plaque (3), ladite au moins une broche (20a, 20b), ledit au moins un connecteur (15) et le premier arbre (22) entre une position reculée de déconnexion respective, dans laquelle ladite au moins une broche (20a, 20b), ledit au moins un connecteur (15) et le premier arbre (22) sont à une première distance respective de la première plaque (3), et une position avancée de connexion, dans laquelle ladite au moins une broche (20a, 20b), ledit au moins un connecteur (15) et le premier arbre (22) sont à une deuxième distance respective, inférieure à la première distance respective, de la première plaque (3);
- un deuxième élément (30) comprenant:
• une deuxième plaque (31) dans laquelle un premier côté (31a) et un deuxième côté (31b) opposé audit premier côté (31a) sont définis, et dans laquelle au moins un trou (39a, 39b) est formé, configuré pour recevoir ladite au moins une broche (20a, 20b) lorsque le deuxième côté (3b) de la première plaque (3) est positionné face au deuxième côté (31b) de la deuxième plaque (31) et que ladite au moins une broche (20a, 20b) est dans la position avancée de connexion respective;
• au moins un connecteur (37) pour permettre, en utilisation, un transfert d'énergie électrique ou d'énergie hydraulique ou d'au moins un fluide dudit tracteur à ladite machine agricole ou audit équipement agricole, ledit au moins un connecteur (37) étant monté sur la deuxième plaque (31) et étant configuré pour s'accoupler, de manière amovible, audit au moins un connecteur (15) du premier élément (2) lorsque le deuxième côté (3b) de la première plaque (3) est positionné face au deuxième côté (31b) de la deuxième plaque (31) et que ledit au moins un connecteur (15) du premier élément (2) est dans la position avancée de connexion respective; et
• un deuxième arbre (41) monté sur la deuxième plaque (31) de manière rotative autour d'un deuxième axe de rotation (Y") et pourvu, à des extrémités correspondantes, d'une première portion de liaison (42), configurée pour se relier, en utilisation, à la prise de force de ladite machine agricole ou dudit équipement agricole pour la transmission d'un couple d'entraînement, et d'une deuxième portion de liaison (44) positionnée sur le deuxième côté (31b) de la deuxième plaque (31) et configurée pour se relier, de manière amovible, à la deuxième portion de liaison (25) du premier arbre (22), pour transmettre un couple d'entraînement, lorsque le deuxième côté (3b) de la première plaque (3) est positionné face au deuxième côté (31b) de la deuxième plaque (31) et que le premier arbre (22) est dans la position avancée de connexion respective.

2. Le système de liaison (1) selon la revendication 1, **caractérisé en ce que** le premier axe de rotation (Y') est essentiellement orthogonal au support (14) et le deuxième axe de rotation (Y") est essentiellement orthogonal à la deuxième plaque (31).

3. Le système de liaison (1) selon l'une quelconque des revendications précédentes, **caractérisé en ce que** ladite au moins une broche (20a, 20b), ledit au moins un connecteur (15) du premier élément (2) et le premier arbre (22) sont montés sur le même support (14) face au premier côté (3a) de la première plaque (3).

4. Le système de liaison (1) selon l'une quelconque des revendications précédentes, **caractérisé**
**en ce que** le premier élément (2) comprend au moins une broche de centrage (16a, 16b) reliée aux moyens de déplacement (17) de manière à ce que ladite au moins une broche de centrage (16a, 16b) puisse être déplacée par les moyens de déplacement (17) entre une position reculée de déconnexion et une position avancée de connexion simultanément aux mouvements de ladite au moins une broche (20a, 20b), dudit au moins un connecteur (15) et du premier arbre (22) entre la position reculée de déconnexion respective et la position avancée de connexion respective, et
**en ce qu'**il y a, dans le deuxième élément (30), au moins un trou (38a, 38b) configuré pour recevoir ladite au moins une broche de centrage (16a, 16b), afin de faciliter la liaison mutuelle entre ledit au moins un connecteur (15) du premier élément (2) et ledit au moins un connecteur (37) du deuxième élément (30), lorsque le deuxième côté (3b) de la première plaque (3) est positionné face au deuxième côté (31b) de la deuxième plaque (31) et que ladite au moins une broche de centrage (16a, 16b) est dans la position avancée de connexion respective.

5. Le système de liaison (1) selon l'une quelconque des revendications précédentes, **caractérisé en ce que** les moyens de déplacement (17) comprennent au moins un système piston-vérin (18a, 18b), relié de façon rotative à la première plaque (3), et au moins un balancier (19a, 19b) relié de façon rotative à la première plaque (3) et audit au moins un système piston-vérin (18a, 18b).

6. Le système de liaison (1) selon l'une quelconque des revendications précédentes, **caractérisé en ce que** le premier élément (2) ou le deuxième élément (30) comprend des moyens d'accrochage (34a, 34b, 35a, 35b, 36a, 36b) pour réaliser l'accouplement entre le premier élément (2) et le deuxième élément (30).

7. Le système de liaison (1) selon la revendication 6, **caractérisé en ce que** les moyens d'accrochage (34a, 34b, 35a, 35b, 36a, 36b) sont reliés à la deuxième plaque (31).

8. Le système de liaison (1) selon la revendication 6 ou 7, **caractérisé en ce que** les moyens d'accrochage (34a, 34b, 35a, 35b, 36a, 36b) sont positionnés au niveau des sommets d'un triangle.

9. Le système de liaison (1) selon l'une quelconque des revendications précédentes, **caractérisé en ce que** le deuxième élément (30) comprend au moins un système piston-vérin (48a, 48b) pour élever et abaisser la deuxième plaque (31); ledit au moins un système piston-vérin (48a, 48b) étant relié à la deuxième plaque (31) et positionné essentiellement parallèle au plan de la deuxième plaque (31).

10. Le système de liaison (1) selon l'une quelconque des revendications précédentes, **caractérisé en ce que** la deuxième portion de liaison (25) du premier arbre (22) présente au moins une rainure périphérique (26) essentiellement parallèle au premier axe de rotation (Y'), et **en ce que** la deuxième portion de liaison (44) du deuxième arbre (41) présente au moins une rainure périphérique (45) essentiellement parallèle au deuxième axe de rotation (Y").

11. Le système de liaison (1) selon l'une quelconque des revendications précédentes, **caractérisé en ce que** ledit au moins un connecteur (15) du premier élément (2) et/ou ledit au moins un connecteur (37) du deuxième élément (30) comprennent au moins une soupape pour permettre automatiquement l'écoulement d'un fluide à travers ladite au moins une soupape lorsque ledit au moins un connecteur (15) du premier élément (2) et ledit au moins un connecteur (37) du deuxième élément (30) sont mutuellement connectés, et pour interrompre automatiquement l'écoulement d'un fluide lorsque ledit au moins un connecteur (15) du premier élément (2) et ledit au moins un connecteur (37) du deuxième élément (30) sont mutuellement déconnectés.

12. Le système de liaison (1) selon l'une quelconque des revendications précédentes, **caractérisé en ce que** ledit au moins un connecteur (15) du premier élément (2) et/ou ledit au moins un connecteur (37) du deuxième élément (30) comprennent au moins un connecteur de type ISOBUS.

13. Le système de liaison (1) selon l'une quelconque des revendications précédentes, **caractérisé en ce que** le premier élément (2) comprend des premiers moyens de liaison (6a, 7a, 6b, 7b, 8a, 9a, 8b, 9b, 10a, 11a, 10b, 11b) configurés pour se relier, en utilisation, à un tracteur, et **en ce que** le deuxième élément (30) comprend des deuxièmes moyens de liaison (46a, 47a, 46b, 47b) configurés pour se relier, en utilisation, à une machine agricole ou à un équipement agricole.
